(19) Europäisches Patentamt
European Patent Office
Office européen des brevets

(11) **EP 4 117 964 B1**

(12) **EUROPEAN PATENT SPECIFICATION**

(45) Date of publication and mention
of the grant of the patent:
**21.05.2025  Bulletin 2025/21**

(21) Application number: **21709439.0**

(22) Date of filing: **09.03.2021**

(51) International Patent Classification (IPC):
**B60Q 1/12** (2006.01)        **F21S 41/663** (2018.01)
**F21S 41/153** (2018.01)

(52) Cooperative Patent Classification (CPC):
**B60Q 1/122; F21S 41/153; F21S 41/663**

(86) International application number:
**PCT/EP2021/055873**

(87) International publication number:
**WO 2021/180692 (16.09.2021 Gazette 2021/37)**

(54) **METHOD FOR CONTROLLING A LIGHT PATTERN AND AUTOMOTIVE LIGHTING DEVICE**

VERFAHREN ZUR STEUERUNG EINES LICHTMUSTERS UND
KRAFTFAHRZEUGBELEUCHTUNGSVORRICHTUNG

PROCÉDÉ DE COMMANDE DE MOTIF LUMINEUX ET DISPOSITIF D'ÉCLAIRAGE AUTOMOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **09.03.2020  FR 2002329**

(43) Date of publication of application:
**18.01.2023  Bulletin 2023/03**

(73) Proprietor: **Valeo Vision**
**93012 Bobigny Cedex (FR)**

(72) Inventors:
 • **KANJ, Ali**
**93012 BOBIGNY Cedex (FR)**

 • **PRAT, Constantin**
**93012 BOBIGNY Cedex (FR)**

(74) Representative: **Valeo Visibility**
**Service Propriété Industrielle**
**c/o Valeo Vision**
**34, rue Saint André**
**93012 Bobigny (FR)**

(56) References cited:
**EP-A1- 2 479 064        EP-A1- 3 459 790
EP-A1- 3 670 263        EP-A1- 3 702 663
EP-A1- 4 110 651        EP-A2- 2 548 768
WO-A1-2017/214648**

EP 4 117 964 B1

**Description**

This invention is related to the field of automotive lighting devices, and more particularly, to the way light patterns are managed when using a Dynamic Bending Light (DBL) functionality.

Dynamic Bending Lights are increasingly present in current automotive lighting devices, becoming an upgrade to standard headlights and designed to make driving at night easier and safer.

To implement such a lighting functionality, there have been many solutions intended to provide a light pattern in the direction of the movement of the vehicle when it is entering a curve. One such method is known from WO 2017214648 A1.

Mechanic-based solutions turn the lighting source as the steering wheel does, by means of an angular movement converter which directly uses the turning of the steering wheel to induce a turning in the lighting source. The lights will turn in whatever direction the wheel does, and this range of motion allows the lights to illuminate the road even when taking sharp turns or turning quickly.

Some of these solutions involve the modification of the light pattern provided by a matrix arrangement of light sources, which may affect to the photometry values and may cause disconformities with lighting regulations.

An alternative solution for this problem is sought.

The invention provides an alternative solution for this problem by a method according to claim 1.

This method allows the compensation of the luminous flux, to reduce the flux variation when a modifying function is applied to the original light pattern. Indeed, in some cases, the flux will remain constant with respect to the original light pattern. Hence, the energy to feed the lighting device does not vary in these situations, despite the modifying function is applied.

In some particular embodiments, the light command is a bending light command and comprises a number of positions to shift and a shifting direction, and then the step of shifting the position of the boundary columns is carried out using this number of positions to shift in the shifting direction.

The DBL functionality is a very powerful functionality for this method, since the luminous intensity of most of the light pixel is subject to change. Hence, the compensation of the luminous flux is very advantageous to avoid sudden changes in the electric power needed to feed the lighting device.

This compensation factor may be the same for all the pixels to which this step is applied or may involve the use of a different compensation factor for some groups of pixels or even for each individual light pixel.

In some particular embodiments, the compensation factor is a global compensation factor which is applied to all of the pixels of the modified light pattern, the global compensation factor being calculated from the total luminous flux of the original light pattern and the total luminous flux of the modified light pattern according to the formula

$$g = 1 + (f1-f0)/f0$$

- wherein g is the global compensation factor, f1 is the total luminous flux of the modified light pattern and f0 is the total luminous flux of the original light pattern.

This is an easy way of compensating the luminous flux, since only the calculation of a compensation factor is needed.

In some particular embodiments, the modified light pattern is divided into at least a first zone and a second zone and the step of dividing the luminous intensity by the compensation factor is only applied to the light pixels of the second zone.

Thus, a particularly relevant zone may be preserved from luminous intensity variation. Even in these embodiments, the compensation factor may be the same for all the pixels of the second zone or may involve the use of a different compensation factor for some groups of pixels or even for each individual light pixel.

In some particular embodiments, the original light pattern is a low beam pattern comprising a kink zone and the first zone contains the kink zone. In other particular embodiments, the original light pattern is a high beam pattern comprising a maximum luminous intensity pixel and the first zone contains the maximum luminous intensity pixel.

These are some examples of particularly relevant zones. In these embodiments, these zones should be preserved to avoid regulatory issues.

In some particular embodiments, the step of compensating the luminous intensity comprises dividing the second zone of the modified light pattern into rows or columns and dividing the luminous intensity of the light pixels each row or column by a compensation factor.

By these embodiments, a more progressive and smooth compensated light pattern is obtained, since the gradient between columns may be adjusted by applying a different compensation factor to each column of the modified light pattern.

In some particular embodiments, the compensation factor of each column is chosen according to a polynomial or gaussian profile which comprises values between a reference compensation factor and 1, and wherein the reference compensation factor is calculated from the total luminous flux of the original light pattern, the total luminous flux of the modified light pattern and the luminous flux of the second according to the formula

-

$$r = 1 + (f12\text{-}fp)/fp,$$

- wherein r is the global compensation factor, f12 is the total luminous flux of the second zone of the modified light pattern and fp is the difference between the total luminous flux of the original light pattern and the luminous flux of the first zone of the modified light pattern.

This method is followed for the sake of the continuity in the light profile. The gaussian profile ensures a smooth adaptation for the compensation factor of each column, although the final luminous flux of the compensated light pattern is not exactly the same as the luminous flux of the original light pattern.

In some particular embodiments, the compensation factor of each column is chosen according to a polynomial or gaussian profile which comprises values between a specific compensation factor and 1, and wherein the specific compensation factor is lower than the reference compensation factor according to the formula

-

$$r = 1 + (f12\text{-}fp)/fp$$

- wherein r is the reference compensation factor, f12 is the total luminous flux of the second zone of the modified light pattern and fp is the difference between the total luminous flux of the original light pattern and the luminous flux of the first zone of the modified light pattern,
- so that the mean value of the compensation factors of all the columns is equal to the reference compensation factor.

In these cases, a lower compensation value is chosen to try to be closer to the flux of the original light pattern.

In a further inventive aspect, the invention provides an automotive lighting device according to claim 10.

This automotive lighting device is configured to provide some special functionalities, such as, e.g., Dynamic Bending Light functionality that may be electrically fed at constant power, since the luminous flux is constant despite the luminous intensity changes in the light pixels.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the life span of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In some particular embodiments, the matrix arrangement comprises at least 2000 solid-state light sources.

This invention can be useful for many types of lighting matrix/array-based technology, from the simplest one, with only a few thousands light sources, to more advanced ones, with several hundred thousand light sources.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

[Fig 1] shows a general perspective view of an automotive vehicle comprising an automotive lighting device according to the invention.

[Fig 2] shows an example of light pattern projected by this lighting device. This pattern corresponds to a low beam functionality.

[Fig 3] shows a non-representative example of luminous intensity values for such a pattern.

[Fig 4a] and [Fig 4b] show the effect of two columns to the left bending light command, according to a particular embodiment of a method according to the invention.

[Fig 5] shows a compensated light pattern after undergoing some steps of a particular embodiment of a method according to the invention.

[Fig 6] shows some steps of an alternative embodiment of a method according to the invention.

[Fig 7] shows the compensated light pattern after undergoing the steps shown in the previous figure.

Elements of the example embodiments are consistently denoted by the same reference numerals throughout the drawings and detailed description where appropriate:

    1 Light pattern

    2 LED

    3 Boundary column of the first portion

    4 Boundary column of the second portion

    5 End column of the first portion

    6 End column of the second portion

    7 First boundary column of the central portion

    8 Second boundary column of the central portion

    9 Control unit

    10 Automotive lighting device

    11 First portion

    12 Second portion

    13 Central portion

    14 Protected zone

    15 Second zone

    16 Steering system

    100 Automotive vehicle

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. Elements of the example embodiments are consistently denoted by the same reference numerals throughout the drawings and detailed description where appropriate.

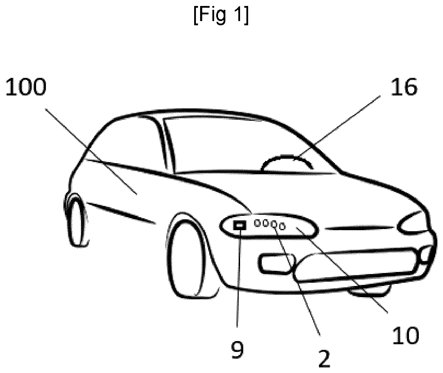

[Fig 1] shows a general perspective view of an automotive vehicle 100 comprising an automotive lighting device 10 according to the invention.

This automotive vehicle 100 comprises a steering system 16 and a lighting device 10. The lighting device 10 comprises a matrix arrangement of LEDs 2 and a control centre 9 which is configured to control the operation of these groups of LEDs.

The control centre 9 is configured to modify the configuration of the LEDs 2 when the steering wheel of the vehicle is activated.

The matrix configuration is a high-resolution module, having a resolution greater than 2000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixelated light beam by the matrix arrangement 6. The control centre is thus able to individually control the light emission of each pixel of the matrix arrangement.

Alternatively to what has been presented above, the matrix arrangement 6 may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

In another variant, the light source may be complex and include both at least one segment of light elements, such as light emitting diodes, and a surface portion of a monolithic light source.

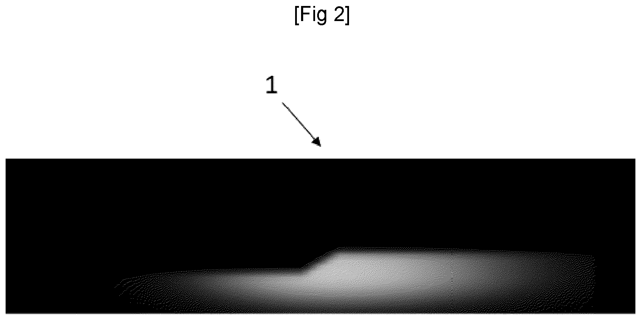

[Fig 2] shows an example of light pattern 1 projected by this lighting device. This pattern corresponds to a low beam functionality.

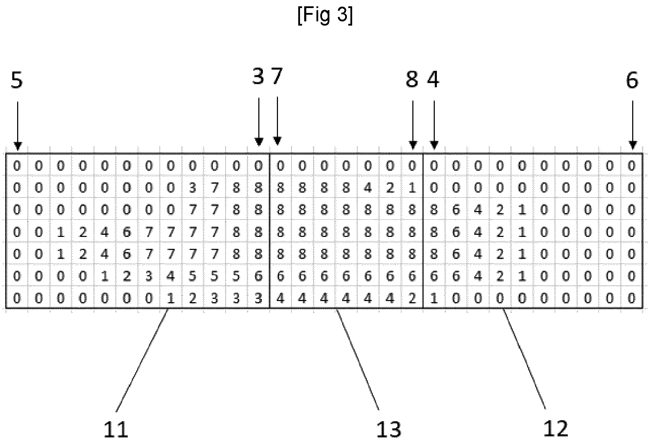

[Fig 3] shows a non-representative example of luminous intensity values for such a pattern. Since the original pattern has thousands of pixels, it will not be useful to represent all of them, but only a small representation has been chosen for the sake of clarity.

Further, although the standard use will be luminous intensity values from 0 to 255, according to a standard grey scale, in this example only numbers from 0 to 9 will be used, to keep the example as simple as possible.

This light pattern is divided into three portions: a first portion 11, a second portion 12 and a central portion 13. The first portion has a boundary column 3, which is adjacent to a first boundary column 7 of the central portion 13, and an end column 5, which is opposite to it. The second portion 12 has in turn a boundary column 4, which is adjacent to a second boundary column 8 of the central portion 13, and an end column 6, which is opposite to it. The central portion 13 has the first 7 and second 8 boundary columns.

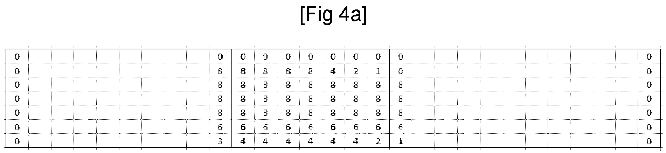

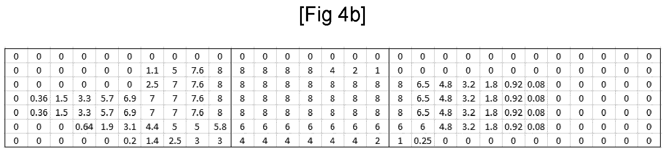

[Fig 4a] and [Fig 4b] show the effect of two columns to the left bending light command, according to a particular embodiment of a method according to the invention.

[Fig 4a] shows a first sub-step: the boundary columns are shifted to the left. The central portion remains the same, but shifted, while in the first and second portions, only the boundary columns and the end columns preserve their value.

[Fig 4b] shows the interpolation of the rest of the values of the first and second portions. This is done by rows, adapting the values to the original ones, by "expanding" or "compressing" the intensity patterns following a bilinear interpolation.

The bilinear method considers a first set of values with a first width and a final width, where this set of values should be converted to. The first width is defined by a first number of pixels (N1) and the final width is defined by a final number of pixels (N2), which can be higher or lower than the first number of pixels. A virtual abscissa segment [0, 1] is divided into N1-1 intervals, according to the first number of pixels. The ordinate values for the abscissa values are the values of the first set of values. Since they are discrete values, linear interpolations between vertices are provided. Then the same virtual interval is divided into N2-1 intervals, thus providing different abscissa values, but all of them also contained between 0 and 1. Since the first set of values defined a continuous function (due to the linear interpolation between vertices), the final abscissa values will find a correspondent value in the continuous function. These values will be the values of the final set of data. For example, the first set of values is (1 3 4 8 10), so the first width is 5, since there are 5 values. The final width is 9. The virtual segment [0, 1] is divided into N1-1=4 intervals with values 0, 0.25, 0.5, 0.75, 1. A function is defined by the vertices defined by the following pairs abscissa-ordinate: (0, 1), (0.25, 3), (0.5, 4), (0.75, 8), (1, 10). Linear interpolations are established between vertices. Now, for the final set of values, the interval is divided into N2-1=8 intervals with values 0, 0.125, 0.25, 0.375, 0.5, 0.625, 0.75, 0.875, 1. The function values for these abscissa values are located, which will be (1 1.5 3 3.5 4 6 8 9 10), so these will be the values of the final set of data.

An alternative method is the nearest neighbour, which considers a first width and a final width and it finds the ratio between first width and final width. Then a normalizing set of values are obtained by dividing the numbers of the final width by the calculated ratio. Finally, for each normalized value of the normalized set of values, the least integer greater or equal value (e.g. ceil function) is calculated, thus obtaining a set of index values. These are the index values in the first vector leading to interpolation. For example: if the first vector is [10 2 9], and should be interpolated into a vector of width of 6. The ratio is 6/3 = 2. The normalized set of values will be (1/2, 2/2, 3/2, 4/2, 5/2, 6/2 = 0.5, 1, 1.5, 2, 2.5, 3 ). Performing ceil function, we obtain the index set of values ceil[( 0.5, 1, 1.5, 2, 2.5, 3 )] = 1, 1, 2, 2, 3, 3. The interpolated vector is then represented by [first_vector(1) first_vector(1) first_vector(2) first_vector(2) first_vector(3) first_vector(3) ] which would be [10 10 2 2 9 9].

Choosing for example the central row, in the original pattern, this row had the values 0-0-1-2-4-6-7-7-7-7-8-8-8-8-8-8-8-8-8-6-4-2-1-0-0-0--0-0. This row, according to the division, will have a first portion 0-0-1-2-4-6-7-7-7-7-8-8, a second portion 8-6-4-2-1-0-0-0-0-0 and a central portion 8-8-8-8-8-8-8.

Since the bending command includes two columns to the left, the first portion will have the following pattern: 0-x-x-x-x-x-x-x-8, the second portion will be 8-x-x-x-x-x-x-x-x-x-0 and the central portion will be 8-8-8-8-8-8-8, but shifted two positions to the left, as shown in [Fig 4a].

The values x of the first portion will be calculated with respect to the data provided by the original first portion: at 8% the value is 0, at 17% the value is 1, at 25% the value is 2, at 33% the value is 4, at 42% the value is 6, at 50% the value is 7, at 58% the value is 7, at 67% the value is 7, at 75% the value is 7, at 83% the value is 8 and at 100% the value is 8.

This provides a curve, and the values at 10%, 20%, 30%, 40%, 50%, 60%, 70%, 80%, 90% and 100% will be calculated for the new width of the first portion, since this compressed first portion only contains 10 pixels, against the 12 pixels of the original first portion. Hence, the new values for this interval will be 0 - 0.4 - 1.5 - 3.3 - 5.6 - 6.9 - 7 - 7 - 7.6 - 8

The same will be performed with the second portion: in the original second portion, at 10% the value is 8, at 20% is 6, at 30% is 4, at 40% is 2, at 50% is 1, and from 60% to 100%, the value is 0. For the new second portion, values will be calculated at at 8%, at 17%, at 25%, at 33%, at 42%, at 50%, at 58%, at 67%, at 75%, at 83% and at 100%. Hence, the new values for this interval will be 8 - 6.5 - 4.8 - 3.2 - 1.8 - 0.9 - 0.1 - 0 - 0 - 0 - 0 - 0

Once this modified light pattern has been obtained, the total flux of the original light pattern and the total flux of the modified light pattern are calculated.

According to this example, the total flux of the original light pattern would be equivalent to 571 lm, while the total flux of the original pattern would be equivalent to 552.4 lm.

A first option would be to calculate a global compensation factor, which is calculated by the formula

-

$$g = 1 + (f1-f0)/f0$$

-     wherein g is the global compensation factor, f1 is the total luminous flux of the modified light pattern and f0 is the total luminous flux of the original light pattern.

According to this example, the global compensation factor would be 0.9674.

Then, the whole luminous intensity values of the modified light pattern should be divided into the global compensation factor to obtain a compensated light pattern which would have a total luminous flux equal to the total luminous flux of the original light pattern.

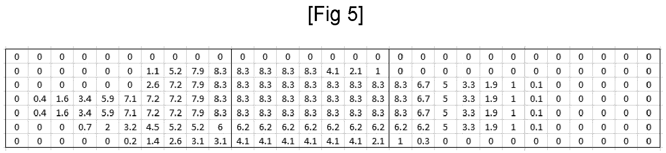

[Fig 5] shows the compensated light pattern after undergoing this process.

The fact is that the maximum value of the light pattern has been altered, since the maximum luminous intensity value in the original light pattern was 8 and the maximum luminous intensity value in the modified light pattern has become 8.3.

Although this may seem a little difference, in real cases, this might cause unconformities according to legal regulations, so this method would not be always the best option. Obviously, in real cases, the global compensation factor would not be that low, and this method can be applied to profiles where the impact of performing a modification is not so high.

An alternative method within the invention comprises a selective application of different compensation factors.

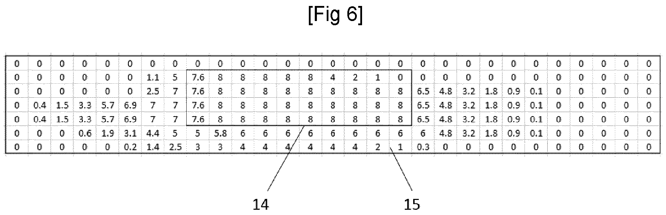

[Fig 6] shows a first example of this method.

Now, a protected portion 14, which contains the pixels with maximum luminous intensity, is defined. This protection means that the protected portion will not undergo any compensation step, to avoid any increase in the maximum luminous intensity value of the compensated pattern.

In real cases, this protected portion may affect to the maximum luminous intensity pixels of a high beam pattern or to the kink portion of a low beam pattern, which contains the cut-off line and is also very sensible to legal regulations.

In this case, due to the fact that the protected portion is not going to increase the luminous intensity values, the compensation affects only to the remainder of the light pattern 15, so the increase in the luminous intensity values of this remainder portion will be higher than in the case of [Fig 5].

The remainder portion sums a total flux equivalent to 259 lm. The protected portion sums a total flux equivalent to 293.4 lm. To obtain a total flux equivalent to the 571 lm of the original light pattern without modifying the 293.4 lm of the protected portion, the remainder portion should sum a flux equivalent to 277.6 lm.

A first option to compensate the flux of this modified pattern would be defining a reference compensation factor (different to the global compensation factor of [Fig 5]) to be applied only to the whole light pixels of the remainder portion, so as the total luminous flux of the compensated light pattern would coincide with the luminous flux of the original light pattern.

This is a valid option, but in some cases could lead to some issues in the boundary light pixels between the protected portion and the compensated portion.

In this case, this reference compensation factor would be, according to the formula applied to the remainder portion, 0.933.

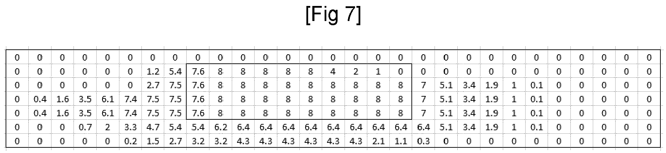

[Fig 7] shows the result of this compensation.

An alternative to this method would be different way of achieving this compensation is dividing the remainder portion in columns. Each column will have a different compensation factor, which will be defined according to a polynomial or gaussian profile which comprises values between a specific compensation factor and 1.

One option for this specific compensation factor is to choose the reference compensation factor calculated in the step of [Fig 7]. A pseudo-gaussian profile is used to calculate the compensation factor for each column. Then, the transition will be smooth and easy to calculate, but the total flux will not be exactly the same as the original.

Al alternative option is to choose a specific compensation factor which is slightly lower to the reference compensation factor, to try to compensate for the fact that most columns will apply a compensation factor higher than this specific compensation factor, trying to achieve that the mean value of all the corresponding compensation factors of each column is equal to the reference compensation factor, thus achieving a total flux as similar as possible to the original.

In the present example, this alternative option would involve defining some compensation factors f1, f2, f3... for each of the columns. The mean value of all these compensation factors f1... fn should be equal to the reference compensation factor, and a polynomic or pseudo-gaussian profile is applied to calculate the particular values of each one. With this example, a more accurate result would be obtained, compared to the result of the previous figures.

Since the variations with respect to the other embodiments are in the order of hundredths, the differences cannot be expressed in the example of the figures, but the skilled person would have enough information in this invention to figure out this particular embodiment of the method.

A further alternative option is that the corresponding compensating factor of each column depends individually on the flux loss of the corresponding column.

## Claims

1. Method for controlling an original light pattern (1) provided by an automotive lighting device (10) of an automotive vehicle (100), wherein the original light pattern (1) comprises a matrix arrangement of light pixels and has a total luminous flux, and wherein each light pixel is **characterized by** a luminous intensity value, the method comprising the steps of

   - receiving a light command from the automotive vehicle (100);
   - modifying the luminous intensity of some of the light pixels of the original light pattern in response to the light command, thus obtaining a modified light pattern;
   - compensating the luminous intensity of some of the light pixels of the modified light pattern, thus obtaining a compensated light pattern such that the luminous flux of the compensated light pattern is closer to the luminous flux of the original light pattern compared to the luminous flux of the modified light pattern;

   **characterized in that**
   the step of modifying the luminous intensity of some of the light pixels comprises the sub-steps of

   - dividing the light pattern (1) in at least a first portion (11) and a second portion (12), wherein each portion (11, 12, 13) comprises at least a boundary column (3, 4) which is in contact with the boundary column of an adjacent portion, and wherein each of the first and the second portion (11, 12) comprises an end column (5, 6) which is opposite to the corresponding boundary column (3, 4);
   - modifying the width of the first portion (11) and the width of the second portion (12) by shifting the position of the boundary columns (3, 4), wherein the end columns (5, 6) are not shifted during the shifting step, and wherein in the first and second portion (11, 12) only the boundary columns (3, 4) and the end columns (5, 6) preserve their value;
   - interpolating the luminous intensity values of the rest of the pixels belonging to the first and second portion (11, 12), wherein the boundary columns (3, 4) that were adjacent before the shifting remain adjacent after the shifting; and
   - **in that** the step of compensating the luminous intensity comprises dividing the luminous intensity of at least some of the light pixels of the modified light pattern by a compensation factor.

2. Method according to claim 1, wherein the light command is a bending light command and comprises a number of positions to shift and a shifting direction, and then the step of shifting the position of the boundary columns is carried out using this number of positions to shift in the shifting direction.

3. Method according to claim 1, wherein the compensation factor is a global compensation factor which is applied to all of the pixels of the modified light pattern, the global compensation factor being calculated from the total luminous flux of the original light pattern and the total luminous flux of the modified light pattern according to the formula

$$g = 1 + (f1-f0)/f0$$

- wherein g is the global compensation factor, f1 is the total luminous flux of the modified light pattern and f0 is the total luminous flux of the original light pattern.

4. Method according to claim 1, wherein the modified light pattern is divided into at least a first zone (14) and a second zone (15) and the step of dividing the luminous intensity by the compensation factor is only applied to the light pixels of the second zone (15).

5. Method according to claim 4, wherein the original light pattern is a low beam pattern comprising a kink zone and the first zone (13) contains the kink zone.

6. Method according to claim 4, wherein the original light pattern is a high beam pattern comprising a maximum luminous intensity pixel and the first zone (13) contains the maximum luminous intensity pixel.

7. Method according to any of claims 4 to 6, wherein the step of compensating the luminous intensity comprises dividing the second zone of the modified light pattern into rows or columns and dividing the luminous intensity of the light pixels each row or column by a corresponding compensation factor.

8. Method according to claim 7, wherein the compensation factor of each column is chosen according to a polynomial or gaussian profile which comprises values between a reference compensation factor and 1, and wherein the reference compensation factor is calculated from the total luminous flux of the original light pattern, the total luminous flux of the modified light pattern and the luminous flux of the second according to the formula

$$r = 1 + (f12-fp)/fp$$

- wherein r is the global compensation factor, f12 is the total luminous flux of the second zone of the modified light pattern and fp is the difference between the total luminous flux of the original light pattern and the luminous flux of the first zone of the modified light pattern.

9. Method according to claim 7, wherein the compensation factor of each column is chosen according to a polynomial or gaussian profile which comprises values between a specific compensation factor and 1, and wherein the specific compensation factor is lower than the reference compensation factor according to the formula

$$r = 1 + (f12-fp)/fp,$$

- wherein r is the reference compensation factor, f12 is the total luminous flux of the second zone of the modified light pattern and fp is the difference between the total luminous flux of the original light pattern and the luminous flux of the first zone of the modified light pattern,
- so that the mean value of the compensation factors of all the columns is equal to the reference compensation factor.

10. Automotive lighting device (10) comprising

- a matrix arrangement of solid-state light sources (2), intended to provide a light pattern (1);
- a control unit (9) configured to perform the steps of a method according to any of the preceding claims.

11. Automotive lighting device according to claim 10, wherein the matrix arrangement comprises at least 2000 solid-state light sources (2).

**Patentansprüche**

1. Verfahren zum Steuern eines ursprünglichen Lichtmusters (1), das von einer Kraftfahrzeugbeleuchtungsvorrichtung (10) eines Kraftfahrzeugs (100) bereitgestellt wird, wobei das ursprüngliche Lichtmuster (1) eine Matrixanordnung von Lichtpixeln umfasst und einen Gesamtlichtstrom aufweist, wobei jedes Lichtpixel durch einen Lichtstärkewert gekennzeichnet ist, wobei das Verfahren die folgenden Schritte umfasst

- Empfangen eines Lichtbefehls von dem Kraftfahrzeug (100);
- Modifizieren der Lichtstärke von einigen der Lichtpixel des ursprünglichen Lichtmusters als Reaktion auf den Lichtbefehl, um auf diese Weise ein modifiziertes Lichtmuster zu erhalten;

- Kompensieren der Lichtstärke von einigen der Lichtpixel des modifizierten Lichtmusters, um auf diese Weise ein kompensiertes Lichtmuster zu erhalten, sodass der Lichtstrom des kompensierten Lichtmusters im Vergleich zu dem Lichtstrom des modifizierten Lichtmusters näher an dem Lichtstrom des ursprünglichen Lichtmusters ist;

**dadurch gekennzeichnet, dass** der Schritt des Modifizierens der Lichtstärke von einigen der Lichtpixel die folgenden Teilschritte umfasst

- Teilen des Lichtmusters (1) in mindestens einen ersten Abschnitt (11) und einen zweiten Abschnitt (12), wobei jeder Abschnitt (11, 12, 13) mindestens eine Begrenzungsspalte (3, 4) umfasst, die in einem Kontakt mit der Begrenzungsspalte eines benachbarten Abschnitts steht, und wobei jeder des ersten und des zweiten Abschnitts (11, 12) eine Endspalte umfasst (5, 6), die entgegengesetzt zur entsprechenden Begrenzungsspalte (3, 4) liegt;
- Modifizieren der Breite des ersten Abschnitts (11) und der Breite des zweiten Abschnitts (12), indem die Position der Begrenzungsspalten (3, 4) verschoben wird, wobei die Endspalten (5, 6) während des Verschiebungsschritts nicht verschoben werden, und wobei in dem ersten und dem zweiten Abschnitt (11, 12) nur die Begrenzungsspalten (3, 4) und die Endspalten (5, 6) ihren Wert beibehalten;
- Interpolieren der Lichtstärkewerte des Rests der Pixel, die zu dem ersten und dem zweiten Abschnitt (11, 12) gehören, wobei die Begrenzungsspalten (3, 4), die vor dem Verschieben benachbart zueinander waren, auch nach dem Verschieben benachbart zueinander bleiben; und
- dadurch, dass der Schritt des Kompensierens der Lichtstärke ein Teilen der Lichtstärke von mindestens einigen der Lichtpixel des modifizierten Lichtmusters durch einen Kompensationsfaktor umfasst.

2. Verfahren nach Anspruch 1, wobei der Lichtbefehl ein Biegelichtbefehl ist und eine Anzahl von Positionen zum Verschieben und eine Verschiebungsrichtung umfasst und wobei danach der Schritt des Verschiebens der Position der Begrenzungsspalten unter Verwendung dieser Anzahl von Positionen zum Verschieben in der Verschiebungsrichtung ausgeführt wird.

3. Verfahren nach Anspruch 1, wobei der Kompensationsfaktor ein globaler Kompensationsfaktor ist, der auf alle Pixel des modifizierten Lichtmusters angewandt wird, wobei der globale Kompensationsfaktor aus dem Gesamtlichtstrom des ursprünglichen Lichtmusters und dem Gesamtlichtstrom des modifizierten Lichtmusters gemäß der folgenden Formel berechnet wird

-

$$g = 1 + (f1-f0)/f0$$

- wobei g der globale Kompensationsfaktor ist, f1 der Gesamtlichtstrom des modifizierten Lichtmusters ist und f0 der Gesamtlichtstrom des ursprünglichen Lichtmusters ist.

4. Verfahren nach Anspruch 1, wobei das modifizierte Lichtmuster in mindestens eine erste Zone (14) und eine zweite Zone (15) geteilt wird und wobei der Schritt des Teilens der Lichtstärke durch den Kompensationsfaktor nur auf die Lichtpixel der zweiten Zone (15) angewandt wird.

5. Verfahren nach Anspruch 4, wobei das ursprüngliche Lichtmuster ein Abblendlichtmuster ist, das eine Knickzone umfasst und wobei die erste Zone (13) die Knickzone enthält.

6. Verfahren nach Anspruch 4, wobei das ursprüngliche Lichtmuster ein Fernlichtmuster ist, das ein Pixel mit maximaler Lichtstärke umfasst, und wobei die erste Zone (13) das Pixel mit maximaler Lichtstärke enthält.

7. Verfahren nach einem der Ansprüche 4 bis 6, wobei der Schritt des Kompensierens der Lichtstärke ein Teilen der zweiten Zone des modifizierten Lichtmusters in Reihen oder Spalten und ein Teilen der Lichtstärke der Lichtpixel jeder Reihe oder Spalte durch einen entsprechenden Kompensationsfaktor umfasst.

8. Verfahren nach Anspruch 7, wobei der Kompensationsfaktor von jeder Spalte gemäß einem polynomischen oder Gaußschen Profil gewählt wird, das Werte zwischen einem Referenzkompensationsfaktor und 1 umfasst, und wobei der Referenzkompensationsfaktor aus dem Gesamtlichtstrom des ursprünglichen Lichtmusters, dem Gesamtlichtstrom des modifizierten Lichtmusters und dem Lichtstrom der zweiten Zone gemäß der folgenden Formel berechnet wird

-

$$r = 1 + (f12-fp)/fp$$

- wobei r der globale Kompensationsfaktor ist, f12 der Gesamtlichtstrom der zweiten Zone des modifizierten Lichtmusters ist und fp die Differenz zwischen dem Gesamtlichtstrom des ursprünglichen Lichtmusters und dem Lichtstrom der ersten Zone des modifizierten Lichtmusters ist.

9. Verfahren nach Anspruch 7, wobei der Kompensationsfaktor von jeder Spalte gemäß einem polynomischen oder Gaußschen Profil gewählt wird, das Werte zwischen einem spezifischen Kompensationsfaktor und 1 umfasst, und wobei der spezifische Kompensationsfaktor gemäß der folgenden Formel kleiner als der Referenzkompensationsfaktor ist

-

$$r = 1 + (f12-fp)/fp,$$

- wobei r der Referenzkompensationsfaktor ist, f12 der Gesamtlichtstrom der zweiten Zone des modifizierten Lichtmusters ist und fp die Differenz zwischen dem Gesamtlichtstrom des ursprünglichen Lichtmusters und dem Lichtstrom der ersten Zone des modifizierten Lichtmusters ist,

- sodass der Mittelwert der Kompensationsfaktoren von allen Spalten gleich dem Referenzkompensationsfaktor ist.

10. Kraftfahrzeugbeleuchtungsvorrichtung (10), umfassend

- eine Matrixanordnung von Halbleiterlichtquellen (2), die dafür vorgesehen ist, ein Lichtmuster (1) bereitzustellen;
- eine Steuereinheit (9), die konfiguriert ist, um die Schritte eines Verfahrens nach einem der vorhergehenden Ansprüche durchzuführen.

11. Kraftfahrzeugbeleuchtungsvorrichtung nach Anspruch 10, wobei die Matrixanordnung mindestens 2000 Halbleiterlichtquellen (2) umfasst.

**Revendications**

1. Procédé destiné à contrôler un motif lumineux initial (1) fourni par un dispositif d'éclairage automobile (10) d'un véhicule automobile (100), dans lequel le motif lumineux initial (1) comprend un agencement matriciel de pixels lumineux et présente un flux lumineux total, et dans lequel chaque pixel lumineux se **caractérise par** une valeur d'intensité lumineuse, le procédé comprenant les étapes de

- réception d'une commande d'éclairage provenant du véhicule automobile (100) ;
- modification de l'intensité lumineuse de certains des pixels lumineux du motif lumineux initial en réponse à la commande d'éclairage, pour obtenir ainsi un motif lumineux modifié ;
- compensation de l'intensité lumineuse de certains des pixels lumineux du motif lumineux modifié, pour obtenir ainsi un motif lumineux compensé tel que le flux lumineux du motif lumineux compensé est plus proche du flux lumineux du motif lumineux initial que le flux lumineux du motif lumineux modifié ;

**caractérisé en ce que** l'étape de modification de l'intensité lumineuse de certains des pixels lumineux comprend les sous-étapes de

- division du motif lumineux (1) au moins en une première partie (11) et une deuxième partie (12), chaque partie (11, 12, 13) comprenant au moins une colonne limite (3, 4) qui est en contact avec la colonne limite d'une partie adjacente, et la première et la deuxième partie (11, 12) comprenant chacune une colonne d'extrémité (5, 6) qui se situe à l'opposé de la colonne limite correspondante (3, 4) ;
- modification de la largeur de la première partie (11) et de la largeur de la deuxième partie (12) par décalage de la position des colonnes limites (3, 4), les colonnes d'extrémité (5, 6) n'étant pas décalées pendant l'étape de décalage, et dans la première et la deuxième partie (11, 12), seules les colonnes limites (3, 4) et les colonnes d'extrémité (5, 6) conservant leur valeur ;
- interpolation des valeurs d'intensité lumineuse du reste des pixels appartenant à la première et la deuxième partie (11, 12), les colonnes limites (3, 4) qui étaient adjacentes avant le décalage restant adjacentes après le décalage ; et
- **en ce que** l'étape de compensation de l'intensité lumineuse comprend la division de l'intensité lumineuse d'au moins certains des pixels lumineux du motif lumineux modifié par un facteur de compensation.

2. Procédé selon la revendication 1, dans lequel la commande d'éclairage est une commande d'éclairage directionnel et comprend un nombre de positions à décaler et une direction de décalage, et l'étape de décalage de la position des colonnes limites est ensuite réalisée au moyen de ce nombre de positions à décaler dans la direction de décalage.

3. Procédé selon la revendication 1, dans lequel le facteur de compensation est un facteur de compensation global qui est appliqué à tous les pixels du motif lumineux modifié, le facteur de compensation global étant calculé à partir du flux lumineux total du motif lumineux initial et du flux lumineux total du motif lumineux modifié selon la formule

-

$$g = 1 + (f1-f0)/f0$$

- où g est le facteur de compensation global, f1 est le flux lumineux total du motif lumineux modifié et f0 est le flux lumineux total du motif lumineux initial.

4. Procédé selon la revendication 1, dans lequel le motif lumineux modifié est divisé au moins en une première zone (14) et une deuxième zone (15) et l'étape de division de l'intensité lumineuse par le facteur de compensation est uniquement appliquée aux pixels lumineux de la deuxième zone (15).

5. Procédé selon la revendication 4, dans lequel le motif lumineux initial est un motif de feu de croisement comprenant une zone coudée et la première zone (13) contient la zone coudée.

6. Procédé selon la revendication 4, dans lequel le motif lumineux initial est un motif de feu de route comprenant un pixel d'intensité lumineuse maximale et la première zone (13) contient le pixel d'intensité lumineuse maximale.

7. Procédé selon l'une quelconque des revendications 4 à 6, dans lequel l'étape de compensation de l'intensité lumineuse comprend la division de la deuxième zone du motif lumineux modifié en rangées et colonnes et la division de l'intensité lumineuse des pixels lumineux de chaque rangée ou colonne par un facteur de compensation correspondante.

8. Procédé selon la revendication 7, dans lequel le facteur de compensation de chaque colonne est choisi en fonction d'un profil polynomial ou gaussien qui comprend des valeurs entre un facteur de compensation de référence et 1, et dans lequel le facteur de compensation de référence est calculé à partir du flux lumineux total du motif lumineux initial, du flux lumineux total du motif lumineux modifié et du flux lumineux de la deuxième zone selon la formule

-

$$- \quad r = 1 + (f12-fp)/fp$$

- où r est le facteur de compensation global, f12 est le flux lumineux total de la deuxième zone du motif lumineux modifié et fp est la différence entre le flux lumineux total du motif lumineux initial et le flux lumineux de la première zone du motif lumineux modifié.

9. Procédé selon la revendication 7, dans lequel le facteur de compensation de chaque colonne est choisi en fonction d'un profil polynomial ou gaussien qui comprend des valeurs entre un facteur de compensation spécifique et 1, et dans lequel le facteur de compensation spécifique est inférieur au facteur de compensation de référence selon la formule

-

$$r = 1 + (f12-fp)/fp,$$

- où r est le facteur de compensation de référence, f12 est le flux lumineux total de la deuxième zone du motif lumineux modifié et fp est la différence entre le flux lumineux total du motif lumineux initial et le flux lumineux de la première zone du motif lumineux modifié,
- de sorte que la valeur moyenne des facteurs de compensation de toutes les colonnes est égale au facteur de compensation de référence.

10. Dispositif d'éclairage automobile (10) comprenant

- un agencement matriciel de sources de lumière à semi-conducteurs (2), destiné à fournir un motif lumineux (1) ;
- une unité de commande (9) conçue pour effectuer les étapes d'un procédé selon l'une quelconque des revendications précédentes.

11. Dispositif d'éclairage automobile selon la revendication 10, dans lequel l'agencement matriciel comprend au moins 2000 sources de lumière à semi-conducteurs (2).

[Fig 1]

[Fig 2]

1

[Fig 3]

[Fig 4a]

| 0 | | | | | | 0 | 0 | 0 | 0 | 0 | 0 | 0 | 0 | 0 | | | | | | | | | 0 |
| 0 | | | | | | 8 | 8 | 8 | 8 | 8 | 4 | 2 | 1 | 0 | | | | | | | | | 0 |
| 0 | | | | | | 8 | 8 | 8 | 8 | 8 | 8 | 8 | 8 | 8 | | | | | | | | | 0 |
| 0 | | | | | | 8 | 8 | 8 | 8 | 8 | 8 | 8 | 8 | 8 | | | | | | | | | 0 |
| 0 | | | | | | 8 | 8 | 8 | 8 | 8 | 8 | 8 | 8 | 8 | | | | | | | | | 0 |
| 0 | | | | | | 6 | 6 | 6 | 6 | 6 | 6 | 6 | 6 | 6 | | | | | | | | | 0 |
| 0 | | | | | | 3 | 4 | 4 | 4 | 4 | 4 | 4 | 2 | 1 | | | | | | | | | 0 |

EP 4 117 964 B1

[Fig 4b]

| 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
|---|---|---|---|---|---|---|---|---|---|---|---|---|---|---|---|---|---|---|---|---|---|---|---|---|---|---|---|---|---|
| 0 | 0 | 0 | 0 | 0 | 0 | 1.1 | 5 | 7.6 | 8 | 8 | 8 | 8 | 8 | 4 | 2 | 1 | 0 | 0 | 0 | 0 | 0 | 0 | 0 | 0 | 0 | 0 | 0 | 0 | 0 |
| 0 | 0 | 0 | 0 | 0 | 0 | 2.5 | 7 | 7.6 | 8 | 8 | 8 | 8 | 8 | 8 | 8 | 8 | 8 | 6.5 | 4.8 | 3.2 | 1.8 | 0.92 | 0.08 | 0 | 0 | 0 | 0 | 0 | 0 |
| 0 | 0.36 | 1.5 | 3.3 | 5.7 | 6.9 | 7 | 7 | 7.6 | 8 | 8 | 8 | 8 | 8 | 8 | 8 | 8 | 8 | 6.5 | 4.8 | 3.2 | 1.8 | 0.92 | 0.08 | 0 | 0 | 0 | 0 | 0 | 0 |
| 0 | 0.36 | 1.5 | 3.3 | 5.7 | 6.9 | 7 | 7 | 7.6 | 8 | 8 | 8 | 8 | 8 | 8 | 8 | 8 | 8 | 6.5 | 4.8 | 3.2 | 1.8 | 0.92 | 0.08 | 0 | 0 | 0 | 0 | 0 | 0 |
| 0 | 0 | 0 | 0.64 | 1.9 | 3.1 | 4.4 | 5 | 5 | 5.8 | 6 | 6 | 6 | 6 | 6 | 6 | 6 | 6 | 6 | 4.8 | 3.2 | 1.8 | 0.92 | 0.08 | 0 | 0 | 0 | 0 | 0 | 0 |
| 0 | 0 | 0 | 0 | 0 | 0.2 | 1.4 | 2.5 | 3 | 3 | 4 | 4 | 4 | 4 | 4 | 4 | 2 | 1 | 0.25 | 0 | 0 | 0 | 0 | 0 | 0 | 0 | 0 | 0 | 0 | 0 |

[Fig 5]

| 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
|---|---|---|---|---|---|---|---|---|---|---|---|---|---|---|---|---|---|---|---|---|---|---|---|---|---|---|---|
| 0 | 0 | 0 | 0 | 0 | 0 | 1.1 | 5.2 | 7.9 | 8.3 | 8.3 | 8.3 | 8.3 | 8.3 | 4.1 | 2.1 | 1 | 0 | 0 | 0 | 0 | 0 | 0 | 0 | 0 | 0 | 0 | 0 |
| 0 | 0 | 0 | 0 | 0 | 0 | 2.6 | 7.2 | 7.9 | 8.3 | 8.3 | 8.3 | 8.3 | 8.3 | 8.3 | 8.3 | 8.3 | 8.3 | 6.7 | 5 | 3.3 | 1.9 | 1 | 0.1 | 0 | 0 | 0 | 0 |
| 0 | 0.4 | 1.6 | 3.4 | 5.9 | 7.1 | 7.2 | 7.2 | 7.9 | 8.3 | 8.3 | 8.3 | 8.3 | 8.3 | 8.3 | 8.3 | 8.3 | 8.3 | 6.7 | 5 | 3.3 | 1.9 | 1 | 0.1 | 0 | 0 | 0 | 0 |
| 0 | 0.4 | 1.6 | 3.4 | 5.9 | 7.1 | 7.2 | 7.2 | 7.9 | 8.3 | 8.3 | 8.3 | 8.3 | 8.3 | 8.3 | 8.3 | 8.3 | 8.3 | 6.7 | 5 | 3.3 | 1.9 | 1 | 0.1 | 0 | 0 | 0 | 0 |
| 0 | 0 | 0 | 0.7 | 2 | 3.2 | 4.5 | 5.2 | 5.2 | 6 | 6.2 | 6.2 | 6.2 | 6.2 | 6.2 | 6.2 | 6.2 | 6.2 | 6.2 | 5 | 3.3 | 1.9 | 1 | 0.1 | 0 | 0 | 0 | 0 |
| 0 | 0 | 0 | 0 | 0 | 0.2 | 1.4 | 2.6 | 3.1 | 3.1 | 4.1 | 4.1 | 4.1 | 4.1 | 4.1 | 4.1 | 2.1 | 1 | 0.3 | 0 | 0 | 0 | 0 | 0 | 0 | 0 | 0 | 0 |

[Fig 6]

14   15

[Fig 7]

| 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
|---|---|---|---|---|---|---|---|---|---|---|---|---|---|---|---|---|---|---|---|---|---|---|---|---|---|---|---|---|
| 0 | 0 | 0 | 0 | 0 | 0 | 1.2 | 5.4 | 7.6 | 8 | 8 | 8 | 8 | 8 | 4 | 2 | 1 | 0 | 0 | 0 | 0 | 0 | 0 | 0 | 0 | 0 | 0 | 0 | 0 |
| 0 | 0 | 0 | 0 | 0 | 0 | 2.7 | 7.5 | 7.6 | 8 | 8 | 8 | 8 | 8 | 8 | 8 | 8 | 8 | 7 | 5.1 | 3.4 | 1.9 | 1 | 0.1 | 0 | 0 | 0 | 0 | 0 |
| 0 | 0.4 | 1.6 | 3.5 | 6.1 | 7.4 | 7.5 | 7.5 | 7.6 | 8 | 8 | 8 | 8 | 8 | 8 | 8 | 8 | 8 | 7 | 5.1 | 3.4 | 1.9 | 1 | 0.1 | 0 | 0 | 0 | 0 | 0 |
| 0 | 0.4 | 1.6 | 3.5 | 6.1 | 7.4 | 7.5 | 7.5 | 7.6 | 8 | 8 | 8 | 8 | 8 | 8 | 8 | 8 | 8 | 7 | 5.1 | 3.4 | 1.9 | 1 | 0.1 | 0 | 0 | 0 | 0 | 0 |
| 0 | 0 | 0 | 0.7 | 2 | 3.3 | 4.7 | 5.4 | 5.4 | 6.2 | 6.4 | 6.4 | 6.4 | 6.4 | 6.4 | 6.4 | 6.4 | 6.4 | 6.4 | 5.1 | 3.4 | 1.9 | 1 | 0.1 | 0 | 0 | 0 | 0 | 0 |
| 0 | 0 | 0 | 0 | 0 | 0.2 | 1.5 | 2.7 | 3.2 | 3.2 | 4.3 | 4.3 | 4.3 | 4.3 | 4.3 | 4.3 | 2.1 | 1.1 | 0.3 | 0 | 0 | 0 | 0 | 0 | 0 | 0 | 0 | 0 | 0 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017214648 A1